# EUROPEAN PATENT APPLICATION

(11) **EP 4 602 906 A1**
(43) Date of publication of application: **20.08.2025**
(21) Application number: 24881361.0
(22) Date of filing: 27.09.2024
(51) Int. Cl.: A01D 34/68, A01D 34/71

(54) **LAWN MOWER**

(30) Priority: 24.10.2023 CN 202311389837
(71) Applicant: Nanjing Chervon Industry Co., Ltd., Nanjing, Jiangsu 211106 (CN)
(72) Inventor: YAMAOKA, Toshinari, Nanjing, Jiangsu 211106 (CN); WANG, Hao, Nanjing, Jiangsu 211106 (CN); YIN, Qiqi, Nanjing, Jiangsu 211106 (CN); ZHANG, Qi, Nanjing, Jiangsu 211106 (CN); YANG, Chao, Nanjing, Jiangsu 211106 (CN); XIA, Zhongji, Nanjing, Jiangsu 211106 (CN)
(74) Representative: Sun, Yiming
(86) International application number: PCT/CN2024/121662
(87) International publication number: WO 2025/086995

(57) **Abstract**

A mower includes a main machine including a mowing element configured to implement a mowing function of the mower and a chassis configured to accommodate at least part of the mowing element, where the chassis is formed with an airflow channel, and the airflow channel includes a grass discharge port disposed at a rear end of the main machine; and a grass discharge assembly configured to implement a grass discharge function. The grass discharge assembly includes a body configured to guide grass clippings out of the grass discharge port; and a connecting portion configured to connect the grass discharge assembly to the main machine. The body includes a top wall baffle and a side wall baffle, and the top wall baffle and the side wall baffle are connected so that the body is basically in an inverted L shape.

## Description

This application claims priority to Chinese Patent Application No. 202311389837.5 filed with the China National Intellectual Property Administration (CNIPA) on Oct. 24, 2023, the disclosure of which is incorporated herein by reference in its entirety.

### TECHNICAL FIELD

The present application relates to an electric machine, for example, a mower.

### BACKGROUND

A mower is also referred to as a weeder, a grass mower, a lawn trimmer, etc. The mower is a mechanical tool for trimming lawns, vegetation, etc. and includes a chassis, an engine, a walking mechanism, a cutter, and an operating device. The engine is mounted on the chassis. The cutter is mounted on an output shaft of the engine. The speed of the cutter is increased greatly through the high-speed rotation of the engine, thereby reducing the operation time of a weeding worker and saving a lot of human resources.

In the mowing process of the mower, grass clippings pass through a grass discharge channel and are discharged from a grass discharge port. To control the position where the grass clippings are discharged, a grass discharge assembly may be mounted at the grass discharge port of the mower.

This part provides background information related to the present application, and the background information is not necessarily the existing art.

### SUMMARY

An object of the present application is to solve or at least alleviate part or all of the preceding problems. Therefore, an object of the present application is to provide an inverted L-shaped grass discharge assembly that has a simple structure, reduces a material cost, and is easy to store.

To achieve the preceding object, the present application adopts the technical solutions below.

A mower includes a main machine including a mowing element configured to implement a mowing function of the mower and a chassis configured to accommodate at least part of the mowing element, where the chassis is formed with an airflow channel, and the airflow channel includes a grass discharge port disposed at the rear end of the main machine; and a grass discharge assembly configured to implement a grass discharge function.

The grass discharge assembly includes a body configured to guide grass clippings out of the grass discharge port; and a connecting portion configured to connect the grass discharge assembly to the main machine; where the body includes a top wall baffle and a side wall baffle, and the top wall baffle and the side wall baffle are connected so that the body is basically in an inverted L shape.

In some examples, the top wall baffle includes a first end close to the grass discharge port and a second end opposite to the first end, the second end is away from the grass discharge port relative to the first end, and the width of the first end is greater than or equal to the width of the grass discharge port.

In some examples, the top wall baffle includes a first edge connected to the side wall baffle and a second edge opposite to the first edge, and the angle between a line connecting two endpoints of the second edge and a plane extending along a front and rear direction is greater than or equal to 0° and less than or equal to 15°.

**In** some examples, the top wall baffle includes a first edge connected to the side wall baffle and a second edge opposite to the first edge, and the angle between a line connecting two endpoints of the second edge and a plane extending along a front and rear direction is greater than or equal to 0° and less than or equal to 45°.

**In** some examples, the angle between a line connecting two endpoints of the second end and a plane extending along a left and right direction is greater than or equal to 5° and less than or equal to 10°.

**In** some examples, the angle between a line connecting two endpoints of the second end and a plane extending along a left and right direction is greater than or equal to 0° and less than or equal to 30°.

**In** some examples, the side wall baffle includes the first edge connected to the top wall baffle and a third edge opposite to the first edge, and the angle between a line connecting two endpoints of the third edge and the plane extending along the front and rear direction is greater than or equal to 0° and less than or equal to 15°.

**In** some examples, the side wall baffle includes the first edge connected to the top wall baffle and a third edge opposite to the first edge, and the angle between a line connecting two endpoints of the third edge and the plane extending along the front and rear direction is greater than or equal to 0° and less than or equal to 30°.

In some examples, the side wall baffle includes a third end close to the grass discharge port and a fourth end opposite to the third end, the fourth end is away from the grass discharge port relative to the third end, and the angle between a line connecting two endpoints of the fourth end and a plane extending along a left and right direction is greater than or equal to 70° and less than or equal to 90°.

In some examples, the first edge is a right edge of the top wall baffle, and the side wall baffle is connected to the right edge of the top wall baffle so that the body opens leftwards.

In some examples, the mower further includes a rear wall baffle, the rear wall baffle including a fourth edge connected to the top wall baffle and a fifth edge connected to the side wall baffle.

In some examples, the angle between a line connecting two endpoints of the fourth edge and a plane extending along a left and right direction is greater than or equal to 5° and less than or equal to 10°.

In some examples, the angle between a line connecting two endpoints of the fifth edge and a plane extending along a left and right direction is greater than or equal to 90° and less than or equal to 120°.

In some examples, the top wall baffle includes a first edge connected to the side wall baffle, and the angle between the first edge and the fourth edge is greater than or equal to 120° and less than or equal to 180°.

In some examples, the rear wall baffle is quadrilateral, the rear wall baffle further includes a sixth edge and a seventh edge, the sixth edge is opposite to the fourth edge, and the seventh edge is opposite to the fifth edge.

In some examples, the connecting portion includes a first connecting portion and a second connecting portion; the first connecting portion is located at the upper end of the body and configured to be connected to a housing shaft of the main machine; and the second connecting portion is located at the lower end of the body and configured to be connected to a housing hole of the main machine.

In some examples, the mower further includes a rear cover, the rear cover being connected to the main machine, being located above the grass discharge assembly, and shielding at least part of the top wall baffle.

In some examples, the mower further includes a grass collection basket, where when the grass discharge assembly is not connected to the main machine, the grass collection basket is connected to a housing shaft of the main machine through a third connecting portion and a fourth connecting portion, and the third connecting portion and the fourth connecting portion are located at the upper end of the grass collection basket.

In some examples, a mower includes a main machine including a mowing element configured to implement a mowing function of the mower and a chassis configured to accommodate at least part of the mowing element, where the chassis is formed with an airflow channel, and the airflow channel includes a grass discharge port disposed at the rear end of the main machine; and a grass discharge assembly configured to implement a grass discharge function.

The grass discharge assembly includes a body configured to guide grass clippings out of the grass discharge port; and a connecting portion configured to connect the grass discharge assembly to the main machine; where the body includes a top wall baffle and a side wall baffle, and the side wall baffle and a side of the top wall baffle include a common edge so that the body has an opening on the other side.

In some examples, a right edge of the top wall baffle is connected to the side wall baffle so that the body opens leftwards, and the right edge is the common edge.

In some examples, the top wall baffle includes a first edge connected to the side wall baffle and a second edge opposite to the first edge, the side wall baffle includes the first edge connected to the top wall baffle and a third edge opposite to the first edge, the angle between a line connecting two endpoints of the second edge and a plane extending along a front and rear direction is greater than or equal to 0° and less than or equal to 45°, and the first edge is the common edge.

In some examples, the mower further includes a rear wall baffle, the rear wall baffle including a fourth edge connected to the top wall baffle and a fifth edge connected to the side wall baffle.

In some examples, the mower further includes a rear cover, the rear cover being connected to the main machine, being located above the grass discharge assembly, and shielding at least part of the top wall baffle.

The present application has the following benefits: the mower of the present application may include the grass discharge assembly connected to the grass discharge port at the rear end of the main machine, and the body of the grass discharge assembly includes the top wall baffle and the side wall baffle, which are connected so that the body is in the inverted L shape. The inverted L-shaped body of the grass discharge assembly has the simple structure and reduces the material cost. Additionally, when the grass discharge assembly is not connected to the mower, the grass discharge assembly is easier to store.

### BRIEF DESCRIPTION OF DRAWINGS

FIG. 1 is a perspective view of a mower according to an example.
FIG. 2 is a perspective view showing that a grass discharge port and a grass discharge assembly of the mower in FIG. 1 are connected.
FIG. 3 is a perspective view of a grass discharge assembly of the mower in FIG. 1.
FIG. 4 is a side view of a grass discharge assembly of the mower in FIG. 1.
FIG. 5 is a rear view of a grass discharge assembly of the mower in FIG. 1.
FIG. 6 is a perspective view of a grass discharge assembly of a mower according to an example.
FIG. 7 is a side view of the grass discharge assembly in FIG. 6.
FIG. 8 is a rear view of the grass discharge assembly in FIG. 6.
FIG. 9 is a perspective view of a mower including a rear wall baffle according to an example.
FIG. 10 is a side view of the grass discharge assembly in FIG. 9.
FIG. 11 is a rear view of the grass discharge assembly in FIG. 9.
FIG. 12 is a top view of the grass discharge assembly in FIG. 9.
FIG. 13 is a perspective view of a rear cover and a grass discharge assembly of a mower according to an example.
FIG. 14 is a top view of a grass collection basket of a mower according to an example.
FIG. 15 is a perspective view of a handle height adjustment mechanism of a mower according to an example.
FIG. 16 is a perspective view of a front height adjustment mechanism and a rear height adjustment mechanism of a mower according to an example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

At present, a grass discharge assembly connected to a grass discharge port at the rear end of a main machine is in an inverted U shape, with the top inclined downwards. When discharged from the grass discharge port, grass clippings strike against the grass discharge assembly and then are thrown out. Since the top of the grass discharge assembly is inclined downwards, the grass clippings are not thrown too far and are possible to fall behind rear wheels. Additionally, the inverted U-shaped grass discharge assembly is produced at a relatively high cost and is difficult to store.

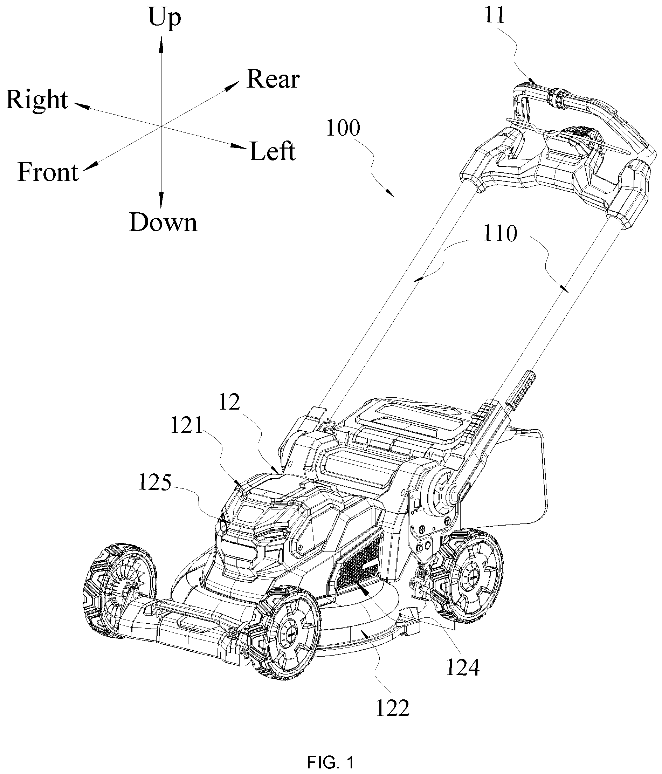

A mower 100 shown in FIG. 1 is configured for a user to cut grass in a lawn, such as a lawn of a garden or a golf course. The grass in the lawn requires regular care and thus needs to be often cut with the mower 100. In this example, the mower 100 is a walk-behind working machine. When operating the mower 100, the user stands behind the mower 100 and pushes the mower 100 to walk on the ground.

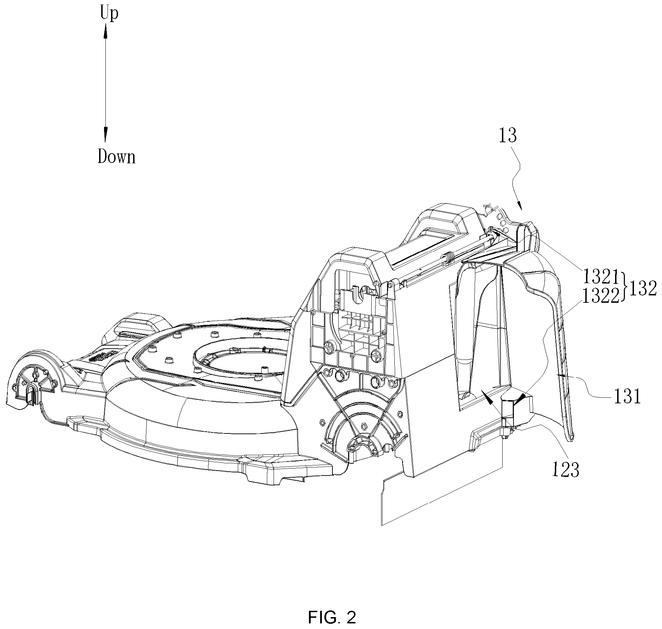

As shown in FIGS. 1 and 2, the mower 100 includes an operating device 11 and a main machine 12. The operating device 11 is configured for the user to hold to operate the mower 100. The main machine 12 includes a main housing 121 and a chassis 122. The operating device 11 is rotatably connected to the main housing 121. As shown in FIG. 2, the main machine 12 further includes a grass discharge port 123. The chassis 122 is configured to accommodate at least part of a mowing element for implementing a mowing function of the mower 100. The chassis 122 is formed with an airflow channel, and the airflow channel includes the grass discharge port 123 disposed at the rear end of the main machine 12. Multiple components included in the main machine 12 are reasonably mounted at various positions of the main machine 12. To facilitate the description of technical solutions, a front side, a rear side, a left side, a right side, an upper side, and a lower side are defined, as shown in FIG. 1.

In some examples, the chassis 122 includes a first cutter disk and a second cutter disk. In other examples, the chassis 122 may include only one cutter disk. Specific implementations of the cutter disk are not limited in the present application. Each cutter disk includes a blade assembly, and the blade assembly may include a first blade and a second blade or may include only one blade. Specific implementations of the blade assembly are not limited in the present application.

As shown in FIG. 1, the main machine 12 further includes a ventilation mesh 124, one ventilation mesh 124 is disposed on each of the left and right sides of the main machine 12, and two ventilation meshes 124 are not fixedly mounted to the main machine. Optionally, the ventilation mesh 124 is detachable and convenient to clean when weeds are stuck in the ventilation mesh 124 or when the ventilation mesh 124 is dirty. Additionally, the ventilation meshes 124 may not be fixedly mounted to the main machine 12 in other manners, which are not limited in the present application.

As shown in FIG. 1, the operating device 11 is connected to the main machine 12 through two handle tubes 110, where the two handle tubes 110 are both steel tubes, thereby ensuring the strength of the two handle tubes 110 and preventing the handle tubes 110 from breaking.

As shown in FIG. 1, the main housing 121 includes a battery pack compartment 125, and the battery pack compartment 125 includes a battery pack compartment body and a battery pack compartment cover. The battery pack compartment body includes a body portion, the body portion surrounds a groove, and the groove is recessed towards the interior of the main housing 121. The groove may be integrally formed with the main housing 121 or may be an independent structure connected to the main housing 121. The battery pack compartment body is formed with an insertion port for a battery pack to be inserted, and the battery pack compartment body and the battery pack compartment cover together enclose the battery pack compartment 125 for accommodating the battery pack.

In some examples, the battery pack compartment body is inclined at a certain angle relative to a horizontal plane and is specifically inclined rearwards in a vertical direction. Therefore, the battery pack is inserted into the battery pack compartment body at a certain angle relative to the horizontal plane. The angle between an insertion direction of the battery pack and the horizontal plane is greater than or equal to 30° and less than or equal to 80°. Specifically, the angle between the insertion direction of the battery pack and the horizontal plane is 54°. That is to say, the battery pack compartment body is inclined at 54° relative to the horizontal plane. Of course, it is to be understood that the angle may have another value within the above range.

As shown in FIG. 2, the mower 100 further includes a grass discharge assembly 13 configured to implement a grass discharge function. The grass discharge assembly 13 includes a body 131 and a connecting portion 132. The body 131 is configured to guide the grass clippings out of the grass discharge port 123. The connecting portion 132 is configured to connect the body 131 to the main machine 12. The connecting portion 132 includes a first connecting portion 1321 and a second connecting portion 1322. In an up and down direction, the first connecting portion 1321 is located at the upper end of the body 131, and the second connecting portion 1322 is located at the lower end of the body 131. The first connecting portion 1321 is configured to be connected to a housing shaft 1201 of the main machine 12, and the second connecting portion 1322 is configured to be connected to a housing hole 1202 of the main machine 12. Optionally, the first connecting portion 1321 may be a hook-like connecting portion and configured to be hung on the housing shaft 1201 of the main machine 12; and the second connecting portion 1322 may include a downward protrusion and configured to be inserted into the housing hole 1202 of the main machine 12. The first connecting portion 1321 is hung on the housing shaft 1201 of the main machine 12 and the second connecting portion 1322 is inserted into the housing hole 1202 of the main machine 12 so that the grass discharge assembly 13 is stably connected to the main machine 12. Additionally, the first connecting portion 1321 and the second connecting portion 1322 may be in any other forms that enable the body 131 to be connected to the main machine 12, which are not limited in the present application.

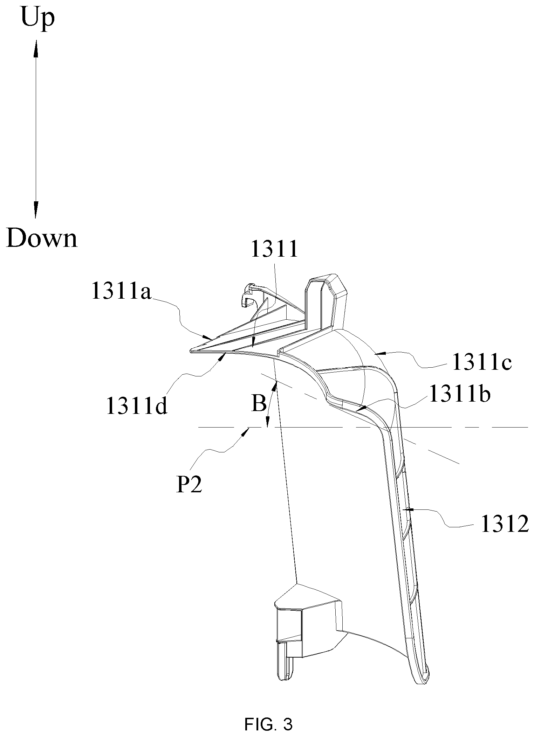

In some examples, as shown in FIG. 3, the body 131 includes a top wall baffle 1311 and a side wall baffle 1312, and the top wall baffle 1311 and the side wall baffle 1312 are connected so that the body 131 is basically in an inverted L shape. In the present application, as shown in FIG. 3, the top wall baffle 1311 and the side wall baffle 1312 share a common edge and are connected through the common edge so that the body 131 is basically in the inverted L shape. In an example, the top wall baffle 1311 includes a first end 1311a close to the grass discharge port 123 and a second end 1311b opposite to the first end 1311a, that is, the second end 1311b is away from the grass discharge port 123 relative to the first end 1311a. To prevent the grass clippings from falling out of the grass discharge assembly 13 when discharged from the grass discharge port 123, the width of the first end 1311a needs to be greater than or equal to the width of the grass discharge port 123.

As shown in FIG. 3, a portion of the top wall baffle 1311 connected to the grass discharge port 123 is the widest, and when moving away from the grass discharge port 123, the top wall baffle 1311 gradually decreases in width. That is, in a direction from the first end 1311a to the second end 1311b, the top wall baffle 1311 gradually decreases in width. In some examples, the top wall baffle 1311 may remain unchanged in width, that is, in the direction from the first end 1311a to the second end 1311b, the top wall baffle 1311 is unchanged in width. Alternatively, in some examples, when moving away from the grass discharge port 123, the top wall baffle 1311 gradually increases in width. That is, in the direction from the first end 1311a to the second end 1311b, the top wall baffle 1311 gradually increases in width.

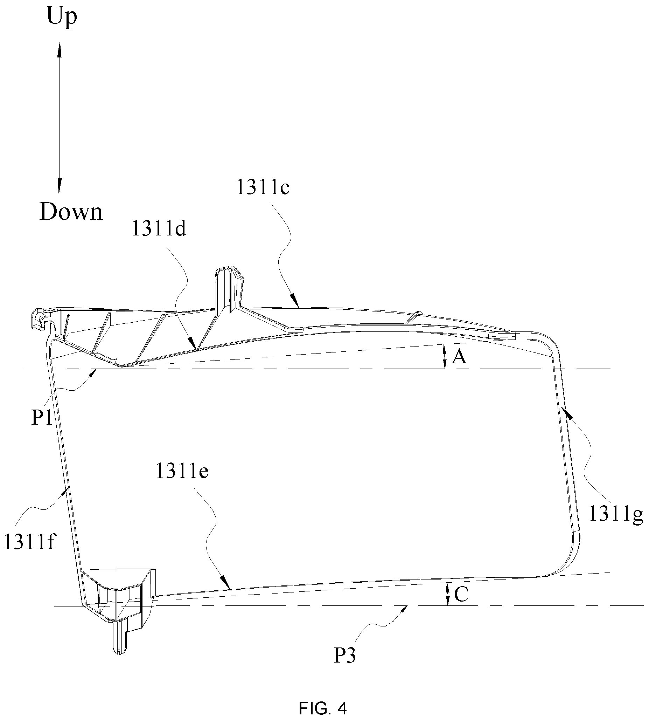

As shown in FIG. 3, the second end 1311b is higher than the first end 1311a in the up and down direction so that the top wall baffle 1311 is gradually inclined upwards in a front and rear direction. The top wall baffle 1311 further includes a first edge 1311c (the common edge) connected to the side wall baffle 1312 and a second edge 1311d opposite to the first edge 1311c. As shown in FIG. 4, the angle between a line connecting two endpoints of the second edge 1311d and a plane extending along the front and rear direction is greater than or equal to 0° and less than or equal to 15°, where the angle is a first angle A in FIG. 4. The first angle A may be 11°. A specific angle of the first angle A represents an angle of upward inclination from the first end 1311a to the second end 1311b. A plane P1 is the plane extending along the front and rear direction and perpendicular to the up and down direction.

As shown in FIG. 3, in a left and right direction, the first edge 1311c is a right edge of the top wall baffle 1311, that is, the side wall baffle 1312 is connected to the right side of the top wall baffle 1311 so that the body 131 opens leftwards. Since the airflow channel reaches the grass discharge port 123 in a leftward direction, the opening direction of the body 131 is configured to be leftward and consistent with the direction in which the airflow channel reaches the grass discharge port 123 so that the grass clippings are thrown out leftwards along the grass discharge assembly 13 when discharged leftwards from the grass discharge port 123, reducing energy consumption and enabling the grass clippings to be thrown farther. Additionally, the top wall baffle 1311 is gradually inclined upwards in the front and rear direction, and the inclination angle also enables the grass clippings to be thrown farther. The opening direction of the grass discharge assembly 13 and the inclination angle of the top wall baffle 1311 together enable the grass clippings to be thrown farther, reducing a possibility that the grass clippings fall onto a freshly cut lawn and improving aesthetics.

As shown in FIG. 3, the second end 1311b is not parallel to a plane extending along the left and right direction. In the up and down direction, an endpoint of the second end 1311b connected to the first edge 1311c is lower than an endpoint of the second end 1311b connected to the second edge 1311d. The angle between a line connecting two endpoints of the second end 1311b and the plane extending along the left and right direction is greater than or equal to 5° and less than or equal to 10°, where the angle is a second angle B in FIG. 3. The second angle B may be 8.5°. A specific angle of the second angle B represents an angle of upward inclination of the second end 1311b from right to left in the left and right direction. A plane P2 is the plane extending along the left and right direction and perpendicular to the up and down direction. In the direction from the first end 1311a to the second end 1311b, the second edge 1311d is inclined upwards so that a connection between the second edge 1311d and the second end 1311b is higher than a connection between the first edge 1311c and the second end 1311b in the up and down direction. The second edge 1311d may be gradually inclined upwards at a fixed angle. Alternatively, the second edge 1311d may be inclined upwards and then downwards. In this case, the connection between the second edge 1311d and the second end 1311b is still higher than the connection between the first edge 1311c and the second end 1311b in the up and down direction. Additionally, as long as it is satisfied that the connection between the second edge 1311d and the second end 1311b is higher than the connection between the first edge 1311c and the second end 1311b in the up and down direction, the second edge 1311d may be inclined in any other manners in the direction from the first end 1311a to the second end 1311b, which are not limited in the present application.

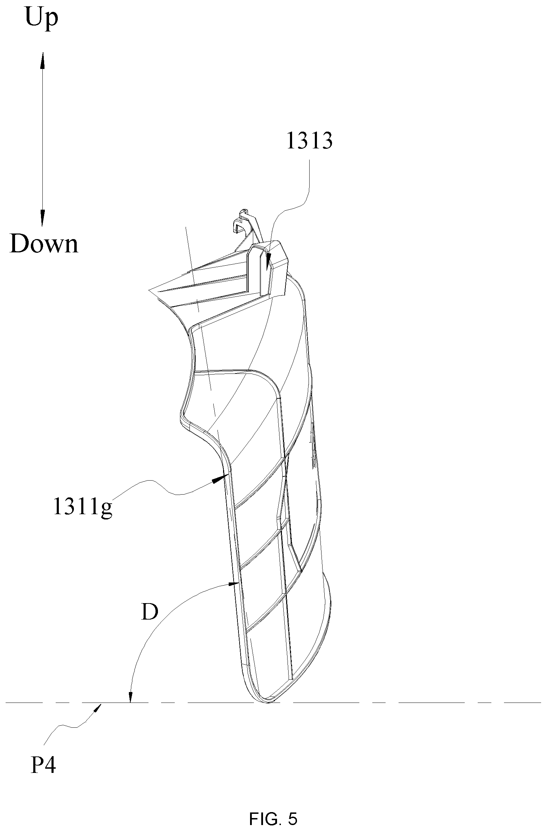

As shown in FIGS. 4 and 5, the side wall baffle 1312 includes the first edge 1311c connected to the top wall baffle 1311 and a third edge 1311e opposite to the first edge 1311c, and the side wall baffle 1312 further includes a third end 1311f close to the grass discharge port 123 and a fourth end 1311g opposite to the third end. To prevent the grass clippings from falling out of the grass discharge assembly 13 when discharged from the grass discharge port 123, the height of the third end 1311f needs to be greater than or equal to the height of the grass discharge port 123. In the up and down direction, the third edge 1311e is gradually inclined upwards in a direction from the third end 1311f to the fourth end 1311g. The angle between a line connecting two endpoints of the third edge 1311e and the plane extending along the front and rear direction is greater than or equal to 0° and less than or equal to 15°. The angle is a third angle C in FIG. 4. The third angle C may be 11°. A specific angle of the third angle C represents an angle of inclination of the third edge 1311e in the direction from the third end 1311f to the fourth end 1311g. A plane P3 is the plane extending along the front and rear direction and perpendicular to the up and down direction. In the up and down direction, the fourth end 1311g is gradually inclined rightwards from top to bottom. The angle between a line connecting two endpoints of the fourth end 1311g and the plane extending along the left and right direction is greater than or equal to 70° and less than or equal to 90°. The angle is a fourth angle D in FIG. 5. The fourth angle D may be 82.8°. A specific angle of the fourth angle D represents an angle of inclination of the fourth end 1311g in a direction from top to bottom. A plane P4 is the plane extending along the left and right direction and perpendicular to the up and down direction.

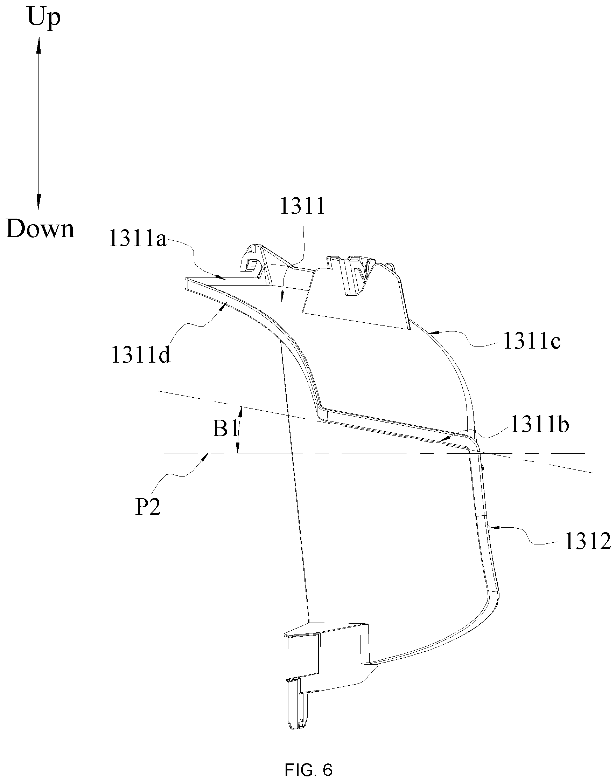

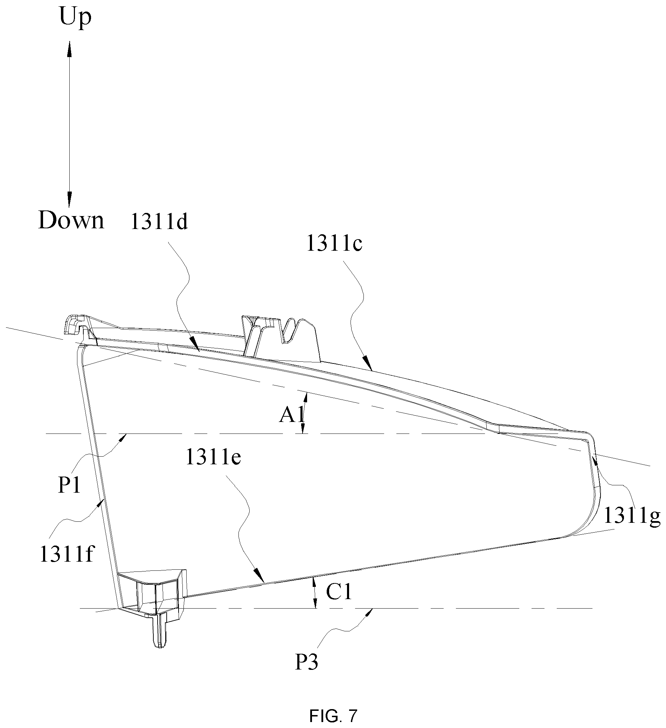

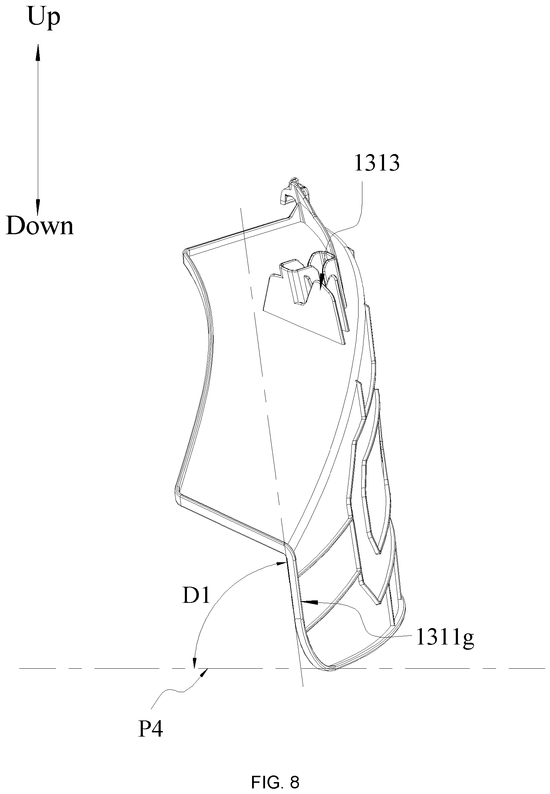

In some examples, as shown in FIGS. 6 to 8, in the up and down direction, the second end 1311b is lower than the first end 1311a so that the top wall baffle 1311 is gradually inclined downwards in the front and rear direction. In this case, the grass clippings are thrown downwards along the top wall baffle 1311 when discharged leftwards from the grass discharge port 123. To prevent the grass clippings from being thrown downwards a relatively short distance, in the direction from the first end 1311a to the second end 1311b, the top wall baffle 1311 remains unchanged in width, or the top wall baffle 1311 decreases in width to a relatively small degree. Thus, the top wall baffle 1311 can guide the grass clippings to be thrown further, reducing the possibility that the grass clippings fall onto the freshly cut lawn, reducing a speed at which the grass clippings are thrown, preventing the grass clippings from injuring the user due to an excessively fast speed, and improving the safety of the grass discharge assembly 13.

As shown in FIGS. 6 to 8, the first angle A1 between the line connecting the two endpoints of the second edge 1311d and the plane extending along the front and rear direction is greater than or equal to 0° and less than or equal to 45°. Optionally, the first angle A1 is 15°. Optionally, the first angle A1 is 23°. Optionally, the first angle A1 is 28°. Optionally, the first angle A1 is 33°. Optionally, the first angle A1 is 40°. The second angle B1 between the line connecting the two endpoints of the second end 1311b and the plane extending along the left and right direction is greater than or equal to 0° and less than or equal to 30°. Optionally, the second angle B1 is 5°. Optionally, the second angle B1 is 8°. Optionally, the second angle B1 is 13°. Optionally, the second angle B1 is 18°. Optionally, the second angle B1 is 22°. The third angle C1 between the line connecting the two endpoints of the third edge 1311e and the plane extending along the front and rear direction is greater than or equal to 0° and less than or equal to 30°. Optionally, the third angle C1 is 5°. Optionally, the third angle C1 is 12°. Optionally, the third angle C1 is 15°. Optionally, the third angle C1 is 20°. Optionally, the third angle C1 is 25°. The fourth angle D1 between the line connecting the two endpoints of the fourth end 1311g and the plane extending along the left and right direction is greater than or equal to 70° and less than or equal to 90°. Optionally, the fourth angle D1 is 73°. Optionally, the fourth angle D1 is 82°. Optionally, the fourth angle D1 is 88°.

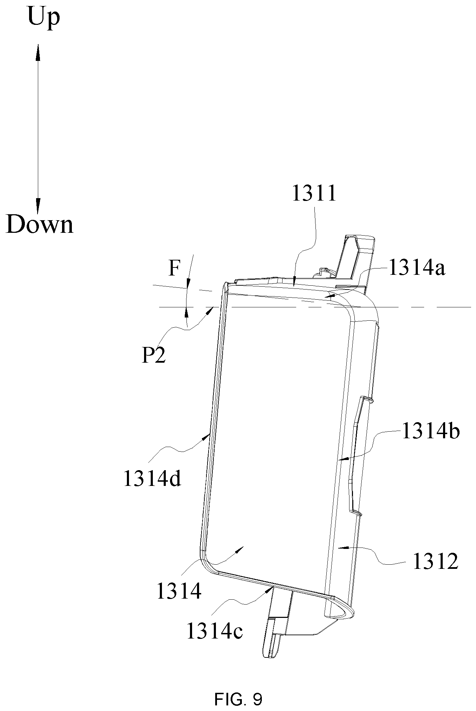

In some examples, as shown in FIG. 9, the mower 100 may further include a rear wall baffle 1314. In this case, the rear wall baffle 1314 does not belong to the body 131, and the common edge through which the top wall baffle 1311 and the side wall baffle 1312 are connected still makes the body 131 basically in the inverted L shape. Therefore, even if the mower 100 is provided with the rear wall baffle 1314, the body 131 is still in the inverted L shape.

The rear wall baffle 1314 includes a fourth edge 1314a connected to the top wall baffle 1311 and a fifth edge 1314b connected to the side wall baffle 1312. The fourth edge 1314a is a common edge between the rear wall baffle 1314 and the top wall baffle 1311, and the fifth edge 1314b is a common edge between the rear wall baffle 1314 and the side wall baffle 1312. Optionally, the fourth edge 1314a may be the second end 1311b, and the fifth edge 1314b may be the fourth end 1311g. In this case, the matching rear wall baffle 1314 is directly added as a rear wall of the body 131 shown in FIGS. 3 to 5. Optionally, the fourth edge 1314a may be irrelevant to the second end 1311b, and the fifth edge 1314b may be irrelevant to the fourth end 1311g. The rear wall baffle 1314 further includes a sixth edge 1314c opposite to the fourth edge 1314a and a seventh edge 1314d opposite to the fifth edge 1314b. Optionally, the sixth edge 1314c may be parallel to the fourth edge 1314a and the seventh edge 1314d may be parallel to the fifth edge 1314b so that the rear wall baffle 1314 is in the shape of a parallelogram or rectangle. Optionally, an extension line of the sixth edge 1314c may intersect an extension line of the fourth edge 1314a and an extension line of the seventh edge 1314d may intersect an extension line of the fifth edge 1314b so that the rear wall baffle 1314 is in the shape of an irregular quadrilateral. A specific quadrilateral shape of the rear wall baffle 1314 is not limited in the present application. The rear wall baffle 1314 is configured to be quadrilateral so that the grass clippings can be prevented from leaking out from the rear wall baffle 1314.

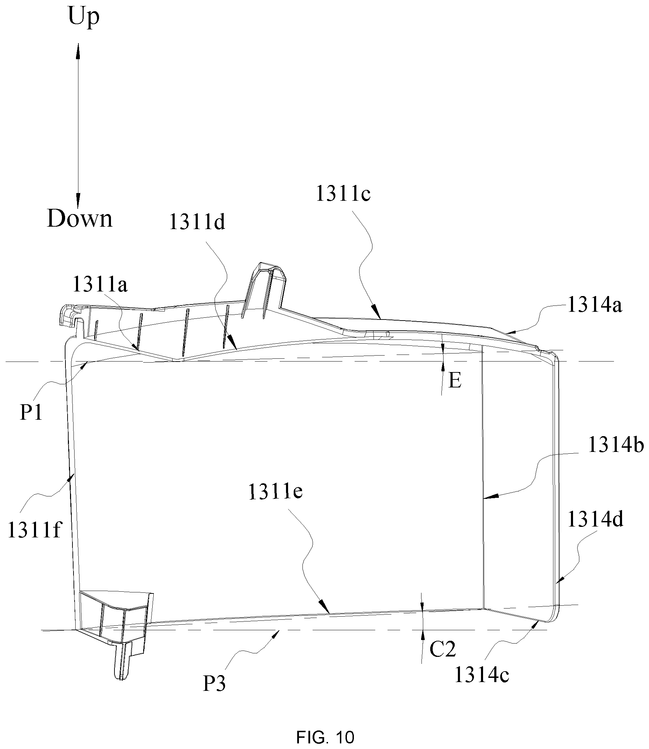

As shown in FIG. 10, the fourth edge 1314a is higher than the first end 1311a in the up and down direction. Specifically, the top wall baffle 1311 is gradually inclined upwards from the first end 1311a and then gradually inclined downwards to the fourth edge 1314a in the front and rear direction, but the fourth edge 1314a is still higher than the first end 1311a so that the whole top wall baffle 1311 presents upward inclination in the front and rear direction. Thus, the grass clippings can be thrown relatively far when discharged from the grass discharge port 123.

The top wall baffle 1311 includes the first edge 1311c (the common edge) connected to the side wall baffle 1312 and the second edge 1311d opposite to the first edge 1311c. The angle between the line connecting the two endpoints of the second edge 1311d and the plane extending along the front and rear direction is greater than or equal to 0° and less than or equal to 15°. The angle is a fifth angle E in FIG. 10. A specific angle of the fifth angle E represents an angle of upward inclination from the first end 1311a to the fourth edge 1314a.

As shown in FIG. 10, to prevent the grass clippings from falling out of the grass discharge assembly 13 when discharged from the grass discharge port 123, the height of the fifth edge 1314b needs to be greater than or equal to the height of the grass discharge port 123. In the up and down direction, the fifth edge 1314b is gradually inclined upwards in a direction from the third end 1311f to the fifth edge 1314b. In this case, the angle between the line connecting the two endpoints of the third edge 1311e and the plane extending along the front and rear direction is still greater than or equal to 0° and less than or equal to 15°. The angle is the third angle C2 in FIG. 10. A specific angle of the third angle C2 represents an angle of inclination of the third edge 1311e in the direction from the third end 1311f to the fifth edge 1314b.

As shown in FIG. 9, the fourth edge 1314a is not parallel to the plane extending along the left and right direction. In the up and down direction, an endpoint of the fourth edge 1314a connected to the first edge 1311c is lower than an endpoint of the fourth edge 1314a connected to the second edge 1311d. The angle between a line connecting two endpoints of the fourth edge 1314a and the plane extending along the left and right direction is greater than or equal to 5° and less than or equal to 10°, where the angle is a sixth angle F in FIG. 9.

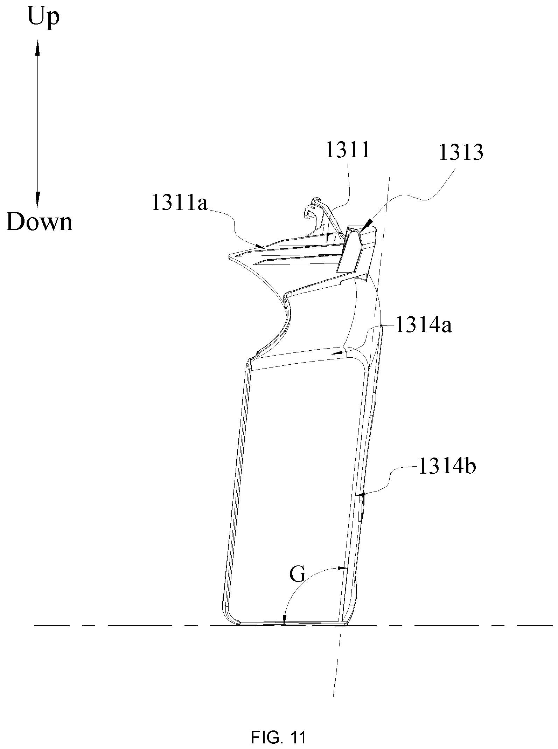

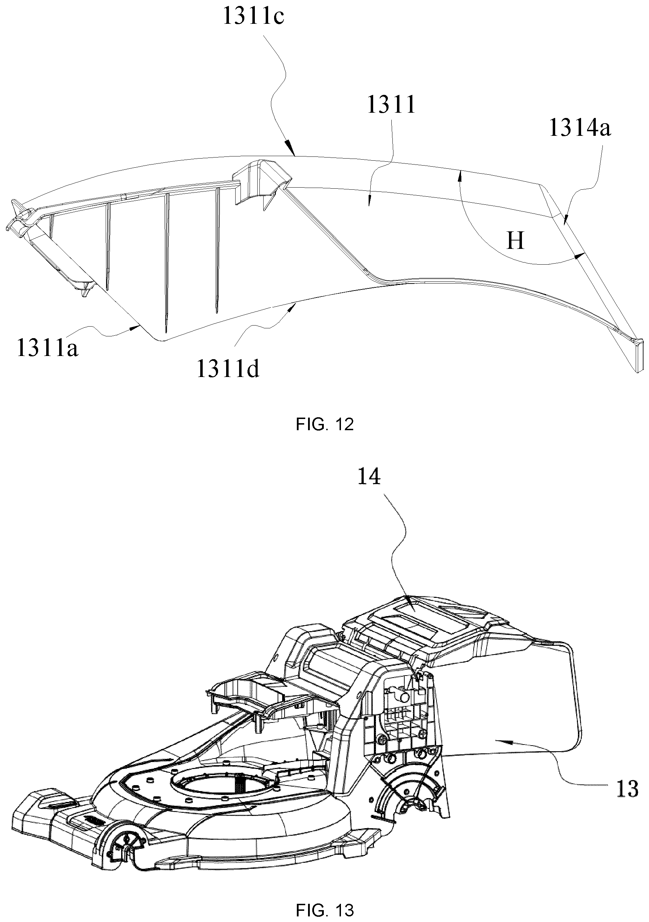

As shown in FIGS. 11 and 12, the portion (the first end 1311a) of the top wall baffle 1311 connected to the grass discharge port 123 is the widest. When moving away from the grass discharge port 123, the top wall baffle 1311 gradually decreases in width and then gradually increases in width to the fourth edge 1314a. Optionally, the first end 1311a and the fourth edge 1314a have the same width. Optionally, the width of the first end 1311a is greater than that of the fourth edge 1314a. Optionally, the width of the first end 1311a is less than that of the fourth edge 1314a. The width of the first end 1311a needs to be greater than or equal to the width of the grass discharge port 123. As shown in FIG. 11, in the up and down direction, the fifth edge 1314b is gradually inclined leftwards from top to bottom, and the angle between a line connecting two endpoints of the fifth edge 1314b and the plane extending along the left and right direction is greater than or equal to 90° and less than or equal to 120°, where the angle is a seventh angle G in FIG. 11.

As shown in FIG. 10, in a direction from the fifth edge 1314b to the opposite seventh edge 1314d, the sixth edge 1314c is gradually inclined downwards and the fourth edge 1314a is also gradually inclined downwards so that the grass clippings can be thrown downwards after passing through the rear wall baffle 1314 when discharged from the grass discharge port, reducing the speed at which the grass clippings are thrown after being discharged from the grass discharge port 123. As shown in FIG. 12, an eighth angle H between the first edge 1311c and the fourth edge 1314a is greater than or equal to 120° and less than or equal to 180°. An obtuse angle is formed between the rear wall baffle 1314 and the side wall baffle 1312 so that when the grass clippings are discharged from the grass discharge port 123, the speed at which the grass clippings are thrown can be reduced, the grass clippings are not hindered from being thrown, the grass clippings can be guided to be thrown relatively far at a relatively low speed, preventing the grass clippings from an excessively fast speed and potentially injuring the user, and improving the safety of the grass discharge assembly 13.

As shown in FIG. 13, the mower 100 further includes a rear cover 14, the rear cover 14 is connected to the main machine 12 through the housing shaft 1201, and the rear cover 14 is located above the grass discharge assembly 13 and shields at least part of the top wall baffle 1311. The rear cover 14 and the top wall baffle 1311 support each other. A support assembly 1313 on the top wall baffle 1311 is snap-fit with the inner wall of the rear cover 14 to achieve mutual support. Thus, the grass discharge assembly 13 can be more stably connected to the main machine 12, and the rear cover 14 can further help prevent the grass clippings from falling out of the grass discharge assembly 13 during discharge.

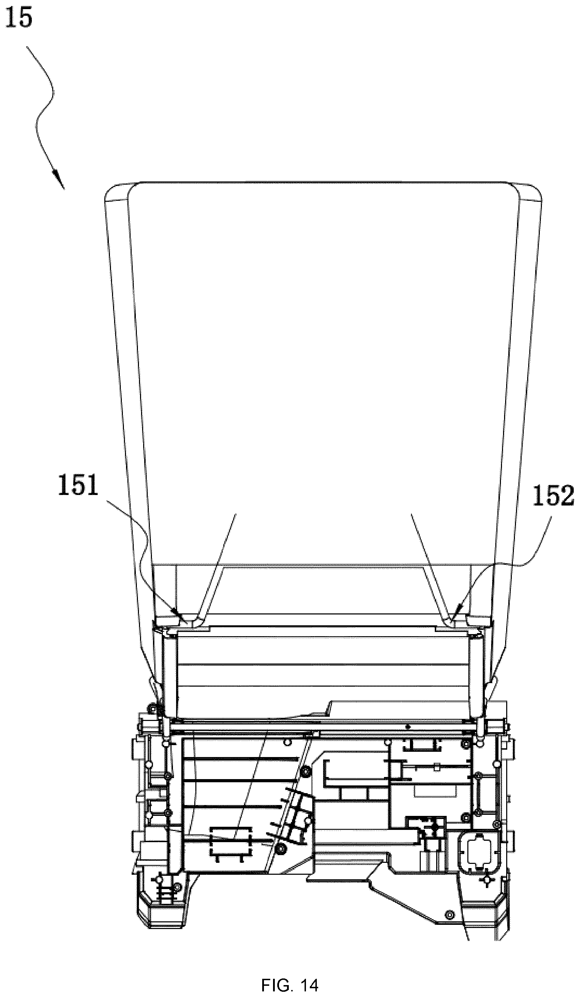

As shown in FIG. 14, the mower 100 further includes a grass collection basket 15. When the grass discharge assembly 13 is not connected to the main machine 12, the grass collection basket 15 is connected to the main machine 12. The grass collection basket 15 includes a third connecting portion 151 and a fourth connecting portion 152, where both the third connecting portion 151 and the fourth connecting portion 152 are located above the grass collection basket 15. The grass collection basket 15 is connected to the housing shaft 1201 of the main machine 12 through the third connecting portion 151 and the fourth connecting portion 152. The third connecting portion 151 and the fourth connecting portion 152 may both be hook-like connecting portions hung on the housing shaft 1201 of the main machine 12 to be connected to the main machine. Additionally, the grass collection basket 15 may be connected to the main machine 12 in other manners, which are not limited in the present application.

Currently, in various types of mowers, the grass discharge assembly connected to the grass discharge port is in the inverted U shape. Compared with the inverted U-shaped grass discharge assembly conventionally used, the inverted L-shaped grass discharge assembly 13 of the present application includes the top wall baffle 1311 and the side wall baffle 1312, which has a simple structure and reduces a material cost. Moreover, compared with the inverted U-shaped grass discharge assembly that is partially surrounded and difficult to store, the grass discharge assembly 13 of the present application is an open inverted L-shaped assembly and convenient to store when the grass discharge assembly 13 is detached from the main machine 12. For example, the grass discharge assembly may be placed on the battery pack for storage, or multiple grass discharge assemblies 13 may be stacked for storage. Additionally, in the case where the inverted U-shaped grass discharge assembly is conventionally used, the inverted L-shaped grass discharge assembly breaks the conventional structure of the grass discharge assembly of the mower.

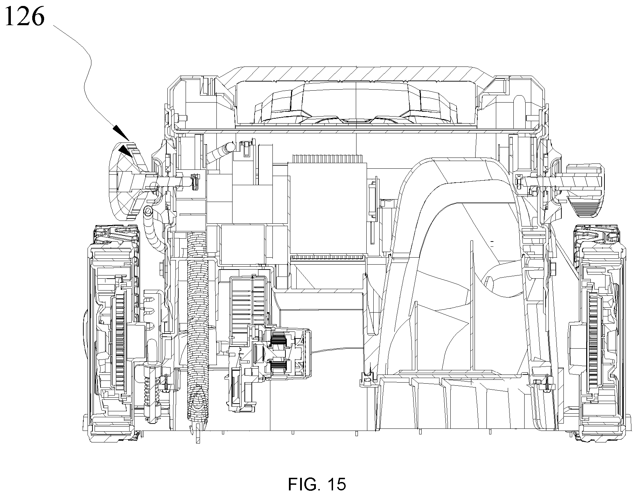

As shown in FIG. 15, to facilitate the operation of the mower 100 by users of different heights, the mower 100 further includes a handle height adjustment mechanism 126. The handle height adjustment mechanism 126 includes an external toothed disc, an internal toothed disc, and a knob. The internal toothed disc is disposed on the body 12. The external toothed disc rotates in mesh with the internal toothed disc. The knob passes through the handle tube 110 and is movably connected to the external toothed disc.

In some examples, a support plate is further disposed between the internal toothed disc and the body 12. The internal toothed disc is connected to the support plate through a connector. The support plate is marked with a height position scale. The external toothed disc is provided with indicator marks. Through the correspondence between the indicator marks and the numbers on the height position scale, the user can clearly know the current height position of the handle tube 110.

In some examples, a Hall element is disposed on the internal toothed disc, and an annular magnet is disposed on the external toothed disc. The dimension of the annular magnet is greater than the dimension of the Hall element, and the annular magnet has a certain length. Optionally, the length of the annular magnet depends on the condition that the Hall element can sense the annular magnet when one of the indicator marks corresponds to a respective one of the numbers on the height position scale.

When the handle tube 110 is at a height position corresponding to one of the numbers on the height position scale, the Hall element can sense the annular magnet, and the mower 100 can start normally. When the handle tube 110 is at a height position not corresponding to any one of the numbers on the height position scale, the annular magnet is distant from and cannot be sensed by the Hall element, and the mower 100 cannot start normally. Thus, when the handle tube 110 of the mower 100 is in a folded state or another non-working state in which the indicator marks do not correspond to the numbers on the height position scale, the mower 100 cannot start, thereby improving safety in the use of the mower 100.

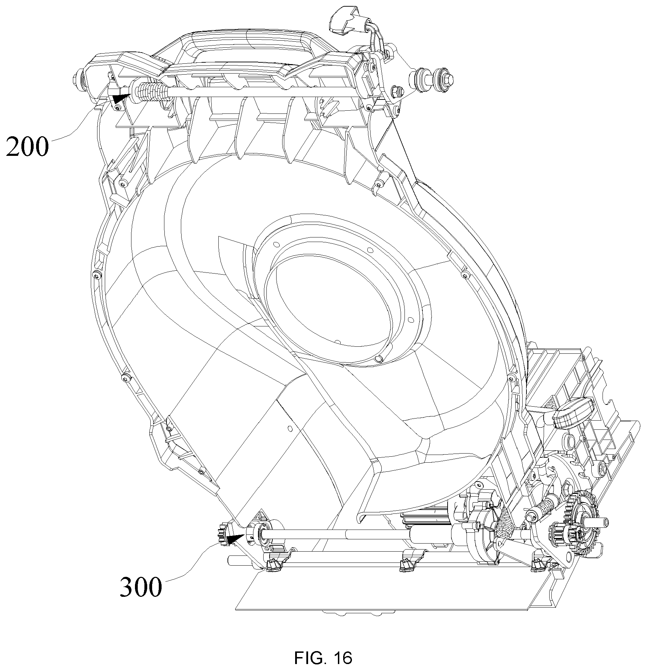

As shown in FIG. 16, the mower 100 includes a front height adjustment mechanism 200 and a rear height adjustment mechanism 300. The front height adjustment mechanism 200 is used for adjusting the height of the front portion of the body 12 while the rear height adjustment mechanism 300 is used for adjusting the height of the rear portion of the body 12.

In some examples, the front height adjustment mechanism 200 includes a first elastic member and a front height adjustment rotating shaft. One end of the first elastic member is connected to the body 12, and the other end of the first elastic member is connected to the front height adjustment rotating shaft. When the height of the front portion of the body 12 is adjusted, the base plate of the body 12 falls under the action of gravity. The elastic force of the first elastic member can counteract the gravity. Therefore, the user only needs to gently hold the base plate to adjust the height, thereby saving time and effort. In some examples, the first elastic member is a torsion spring. The torsion spring is sleeved on the front height adjustment rotating shaft. One end of the torsion spring abuts against the base plate of the body 12, and the other end of the torsion spring is connected to a fixed plate fixed on the front height adjustment rotating shaft.

In some examples, the rear height adjustment mechanism 300 includes a second elastic member and a rear height adjustment rotating shaft. One end of the second elastic member is connected to the body 12, and the other end of the second elastic member is connected to the rear height adjustment rotating shaft. When the height of the rear portion of the body 12 is adjusted, the base plate of the body 12 falls under the action of gravity. The elastic force of the second elastic member can counteract the gravity. Therefore, the user only needs to gently hold the base plate to adjust the height, thereby saving time and effort. In some examples, the second elastic member is a tension spring. One end of the tension spring is connected to a tension spring hook on the base plate of the body 12, and the other end of the tension spring is fixedly connected to the rear height adjustment rotating shaft.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A mower, comprising:
a main machine comprising a mowing element configured to implement a mowing function of the mower and a chassis configured to accommodate at least part of the mowing element, wherein the chassis is formed with an airflow channel, and the airflow channel comprises a grass discharge port disposed at a rear end of the main machine; and
a grass discharge assembly configured to implement a grass discharge function;
wherein the grass discharge assembly comprises:
a body configured to guide grass clippings out of the grass discharge port; and
a connecting portion configured to connect the grass discharge assembly to the main machine;
wherein the body comprises a top wall baffle and a side wall baffle, and the top wall baffle and the side wall baffle are connected so that the body is basically in an inverted L shape.

2. The mower according to claim 1, wherein the top wall baffle comprises a first end close to the grass discharge port and a second end opposite to the first end, the second end is away from the grass discharge port relative to the first end, and a width of the first end is greater than or equal to a width of the grass discharge port.

3. The mower according to claim 1, wherein the top wall baffle comprises a first edge connected to the side wall baffle and a second edge opposite to the first edge, and an angle between a line connecting two endpoints of the second edge and a plane extending along a front and rear direction is greater than or equal to 0° and less than or equal to 45°.

4. The mower according to claim 2, wherein an angle between a line connecting two endpoints of the second end and a plane extending along a left and right direction is greater than or equal to 0° and less than or equal to 30°.

5. The mower according to claim 3, wherein the side wall baffle comprises the first edge connected to the top wall baffle and a third edge opposite to the first edge, and an angle between a line connecting two endpoints of the third edge and the plane extending along the front and rear direction is greater than or equal to 0° and less than or equal to 30°.

6. The mower according to claim 1, wherein the side wall baffle comprises a third end close to the grass discharge port and a fourth end opposite to the third end, the fourth end is away from the grass discharge port relative to the third end, and an angle between a line connecting two endpoints of the fourth end and a plane extending along a left and right direction is greater than or equal to 70° and less than or equal to 90°.

7. The mower according to claim 3, wherein the first edge is a right edge of the top wall baffle, and the side wall baffle is connected to the right edge of the top wall baffle so that the body opens leftwards.

8. The mower according to claim 1, further comprising a rear wall baffle, the rear wall baffle comprising a fourth edge connected to the top wall baffle and a fifth edge connected to the side wall baffle.

9. The mower according to claim 8, wherein an angle between a line connecting two endpoints of the fourth edge and a plane extending along a left and right direction is greater than or equal to 5° and less than or equal to 10°.

10. The mower according to claim 8, wherein an angle between a line connecting two endpoints of the fifth edge and a plane extending along a left and right direction is greater than or equal to 90° and less than or equal to 120°.

11. The mower according to claim 8, wherein the top wall baffle comprises a first edge connected to the side wall baffle, and an angle between the first edge and the fourth edge is greater than or equal to 120° and less than or equal to 180°.

12. The mower according to claim 8, wherein the rear wall baffle is quadrilateral, the rear wall baffle further comprises a sixth edge and a seventh edge, the sixth edge is opposite to the fourth edge, and the seventh edge is opposite to the fifth edge.

13. The mower according to claim 1, wherein the connecting portion comprises a first connecting portion and a second connecting portion; the first connecting portion is located at an upper end of the body and configured to be connected to a housing shaft of the main machine; and the second connecting portion is located at a lower end of the body and configured to be connected to a housing hole of the main machine.

14. The mower according to claim 1, further comprising a rear cover, the rear cover being connected to the main machine, being located above the grass discharge assembly, and shielding at least part of the top wall baffle.

15. The mower according to claim 8, further comprising a grass collection basket, wherein when the grass discharge assembly is not connected to the main machine, the grass collection basket is connected to a housing shaft of the main machine through a third connecting portion and a fourth connecting portion, and the third connecting portion and the fourth connecting portion are located at an upper end of the grass collection basket.

16. A mower, comprising:
a main machine comprising a mowing element configured to implement a mowing function of the mower and a chassis configured to accommodate at least part of the mowing element, wherein the chassis is formed with an airflow channel, and the airflow channel comprises a grass discharge port disposed at a rear end of the main machine; and
a grass discharge assembly configured to implement a grass discharge function;
wherein the grass discharge assembly comprises:
a body configured to guide grass clippings out of the grass discharge port; and
a connecting portion configured to connect the grass discharge assembly to the main machine;
wherein the body comprises a top wall baffle and a side wall baffle, and the side wall baffle and a side of the top wall baffle comprise a common edge so that the body has an opening on another side.

17. The mower according to claim 16, wherein a right edge of the top wall baffle is connected to the side wall baffle so that the body opens leftwards, and the right edge is the common edge.

18. The mower according to claim 16, wherein the top wall baffle comprises a first edge connected to the side wall baffle and a second edge opposite to the first edge, the side wall baffle comprises the first edge connected to the top wall baffle and a third edge opposite to the first edge, an angle between a line connecting two endpoints of the second edge and a plane extending along a front and rear direction is greater than or equal to 0° and less than or equal to 45°, and the first edge is the common edge.

19. The mower according to claim 16, further comprising a rear wall baffle, the rear wall baffle comprising a fourth edge connected to the top wall baffle and a fifth edge connected to the side wall baffle.

20. The mower according to claim 16, further comprising a rear cover, the rear cover being connected to the main machine, being located above the grass discharge assembly, and shielding at least part of the top wall baffle.
